# EUROPÄISCHE PATENTSCHRIFT

(11) **EP 0 580 005 B1**
(45) Veröffentlichungstag und Bekanntmachung des Hinweises auf die Patenterteilung: **05.03.1997**
(21) Anmeldenummer: 93110741.1
(22) Anmeldetag: 05.07.1993
(51) Int. Cl.: B01D 50/00

(54) **Verfahren und Abscheidesystem zur Entfernung von Partikeln aus Prozessgasen chemischer oder petrochemischer Anlagen**
Process and separation system for eliminating particles from process gases of chemical or petrochemical plants
Procédé et système de séparation pour éliminer des particules de gaz provenant d'installations chimiques ou pétrochimiques

(30) Priorität: 15.07.1992 DE 4223278
(43) Veröffentlichungstag der Anmeldung: 26.01.1994
(73) Patentinhaber: Linde Aktiengesellschaft, 65189 Wiesbaden (DE); GST SYSTEME, GESELLSCHAFT FÜR ABSCHEIDE- UND STEUERTECHNIK mbH, D-63517 Rodenbach (DE); BASF Aktiengesellschaft, 67063 Ludwigshafen (DE)
(72) Erfinder: Bölt, Heinz Dipl.-Ing., D-82515 Wolfratshausen (DE); Walser, Franz Dipl.-Ing., D-82418 Murnau (DE); Schöneborn, Axel, D-63517 Rodenbach 1 (DE); Wunsch, Gerd Dr., D-67346 Speyer (DE); Stabel, Uwe Dr., D-68535 Edingen-Neckarhausen (DE)
(74) Vertreter: Kasseckert, Rainer

(56) Entgegenhaltungen:
- DE-A- 3 627 734
- US-A- 4 579 567
- US-A- 4 865 629

## Beschreibung

Die Erfindung betrifft ein Verfahren zur Entfernung von Partikeln, insbesondere Rußpartikeln, aus in chemischen oder petrochemischen Anlagen anfallenden partikelhaltigen Prozeßgasströmen mit einem mehrstufigen Abscheidesystem, wobei die Partikel in einer ersten Stufe über Fliehkraftabscheider und in einer zweiten Stufe durch Feinfilter aus dem Gasstrom entfernt werden, sowie ein Abscheidesystem zur Entfernung von Partikeln, insbesondere Rußpartikeln, aus Gasströmen chemischer oder petrochemischer Anlagen mit zweistufigem Aufbau, wobei eine erste Stufe ein oder mehrere Fliehkraftabscheider und eine zweite Stufe Feinfilter enthält.

In zahlreichen chemischen oder petrochemischen Anlagen fallen partikelhaltige Prozeßgasströme an. Diese Partikel, insbesondere Rußpartikel, zeichnen sich in der Regel durch einen thermischen Phasenübergang in die Gasphase aus. Die Partikel müssen aus den Prozeßgasströmen entfernt werden, da sie sich in nachfolgenden Anlageteilen negativ auswirken.

Üblicherweise werden die Partikel daher in Ölwäschen aus den Prozeßgasströmen entfernt. Dieses bekannte Verfahren bedingt einen erheblichen apparativen Aufwand.

Eine andere Möglichkeit der Partikelabscheidung besteht im Einbau von Filtern, insbesondere von keramischen Filterelementen. Um die notwendige Partikelabscheidung zu gewährleisten, müssen Filter mit großen Abmessungen eingesetzt werden. Der durch die Partikelabscheidung entstehende Druckverlust im Gasstrom ist daher beträchtlich.

Alternativ zu Keramikfiltern verwendbare metallische Filter können zwar in ihren Abmessungen kleiner als Keramikfilter ausfallen. Sie sind jedoch nicht regenerierbar bzw. weisen bei thermischer Regenerierung nur eine sehr kurze Lebensdauer und damit höchstens eine stark eingeschränkte Regenerierbarkeit auf, da das metallische Filtergewebe nicht temperaturbeständig ist bis zu Temperaturen im Bereich der Zündtemperatur des Rußes. Metallische Filter werden daher bei einer Erwärmung auf die Zündtemperatur des Rußes irreparabel geschädigt. Deshalb ist ein häufiger Filterwechsel beim Einsatz von Metallfiltern unumgänglich.

Aus der US-A-4 865 629 ist ein Verfahren und ein mehrstufiges Abscheidesystem zur Entfernung von Partikeln aus Gasströmen bekannt, das eine erste Stufe aus einem odfer mehreren Fliehkraftabscheidern und eine zweite Stufe aus einem Feinfilter bekannt. Der Feinfilter besteht aus einer porösen Filterkeramik. Eine thermische Regenerierung wird nicht in Betracht gezogen.

Der Erfindung liegt daher die Aufgabe zugrunde, ein Verfahren bzw. ein Abscheidesystem der eingangs genannten Art aufzuzeigen, welches auf einfache Art und Weise die Partikelabscheidung sicherstellt, gleichzeitig aber die genannten Nachteile vermeidet.

Diese Aufgabe wird erfindungsgemäß dadurch gelöst, daß die Partikelentfernung mit einem zumindest teilweise thermisch regenerierbaren, vorzugsweise zweistufigen, Abscheidesystem durchgeführt wird, wobei in der zweiten Stufe Feinfilter aus Sintermetall eingesetzt werden.

Dabei findet in einer ersten Stufe eine Agglomeration und Grobabscheidung der Partikel statt, wobei vor allem größere Partikel oder Partikelagglomerate aus dem Gasstrom entfernt werden. In nachfolgenden Stufen wird die Feinabscheidung von restlichen noch im Gasstrom befindlichen Partikeln bewerkstelligt. Die Stufen der Feinabscheidung werden bevorzugt regeneriert, da sie hauptsächlich für den starken Anstieg des Druckverlustes über die Beladungszeit verantwortlich sind. Die Regenerierbarkeit ist gegenüber einem einstufigen Abscheidesystem (beispielsweise mit Filter) wesentlich erleichtert, da nur die in der Feinabscheidung angelagerten Partikel bei der Regenerierung entfernt werden müssen. Diese erfindungsgemäße Verfahrensführung ermöglicht daher trotz mehrerer Stufen eine Partikelabscheidung unter einem verhältnismäßig geringen apparativen Aufwand und bei einem vertretbaren Druckverlust.

Das erfindungsgemäße Verfahren zur Partikelentfernung erzielt besondere Vorteile dadurch, daß die Partikel in einer ersten Stufe über Fliehkraftabscheider und in einer zweiten Stufe durch Feinfilter aus dem Gasstrom entfernt werden. Fliehkraftabscheider unterstützen, durch die Art und Weise ihrer Durchströmung bedingt, die Agglomeration von Partikeln. Bei der beschriebenen erfindungsgemäßen Verfahrensführung werden grobe Partikel beziehungsweise Partikelagglomerate im Fliehkraftabscheider vom Gasstrom entfernt, während lediglich der nicht agglomerierte, noch im Gasstrom verbleibende Restgehalt an kleineren Partikeln durch die Feinfilter der zweiten Stufe abgeschieden wird.

Die erfindungsgemäß benutzten Fliehkraftabscheider können aufgrund ihrer Funktionsprinzips kontinuierlich betrieben werden, ohne regeneriert werden zu müssen. Als Fliehkraftabscheider eignen sich insbesondere Multizyklone.

Demgegenüber setzen sich die Feinfilter durch Partikelanlagerungen, insbesondere duch Rußansammlung auf dem Filtermedium, zu, was zu einem immer größeren Druckverlust im Gasstrom führt. Mit Vorteil wird daher zur Regenerierung der Feinfilter die Temperatur auf eine Temperatur größer oder gleich der Zündtemperatur von Ruß erhöht. Der auf dem Filtermedium festgesetzte Ruß brennt bei diesen Bedingungen ab und stellt somit eine erneute Beladbarkeit der Feinfilter sicher. Da die mit den Feinfiltern abzuscheidende Partikelmenge nur einen Bruchteil der im Rohgas vor der Grobabscheidung in der ersten Stufe des erfindungsgemäßen Abscheidesystems enthaltene Partikelmenge darstellt, ist durch die Erfindung eine relativ lange Beladungszeit der Feinfilter bis zur Regenerierung möglich.

Das verwendete Filtermaterial der Feinfilter besteht erfindungsgemäß aus Sintermetall. Gegenüber bekannten Metallfiltern zeichnen sich die erfindungsgemäßen Feinfilter aus Sintermetallen durch eine wesentlich höhere Temperaturbeständigkeit (bis über die Zündtemperatur von Ruß) aus, wodurch eine problemlose thermische Regenerierbarkeit des Feinfilters durch Erwärmung über die Zündtemperatur des Rußes gewährleistet ist. Außerdem sind die erfindungsgemäßen Feinfilter aus Sintermetall gegenüber unterschiedlichen Verfahrensbedingungen bei Filterbetrieb und Regenerierung, beispielsweise wechselnde oxidierende und reduzierende Bedingungen, beständig.

Besonders geeignet für das erfindungsgemäße Verfahren sind Feinfilter aus ferritischen Sintermetallen.

Die Erwärmung zur Regenerierung der Feinfilter auf oder über die Zündtemperatur des Rußes, also auf etwa 450-550°C, kann durch direkte Anwärmung des zu reinigenden Gasstromes, durch Zumischen eines Heißgases zu diesem Gasstrom und/oder durch Widerstandsheizung des leitenden Sintermetalles der Feinfilter erreicht werden. Das Abbrennen der Rußpartikel kann dabei durch Zufuhr eines Sauerstoff-haltigen Hilfsgases unterstützt werden. Als besonders vorteilhaft hat sich ein Hilfsgas mit einem Sauerstoffgehalt unter 10 %, vorzugsweise unter 5 %, erwiesen. Als Trägergas kann für das Hilfsgas beispielsweise Stickstoff eingesetzt werden.

Die erfindungsgemäße Verfahrensführung ermöglicht eine periodische Regenerierung, was zu einer erleichterten Steuerung der Anlage führt.

Ein bedeutender Vorteil des erfindungsgemäßen Verfahrens liegt darin, daß während der Regenerierung die Filtrierfähigkeit der Feinfilter nicht eingeschränkt ist, so daß das erfindungsgemäße Verfahren kontinuierlich betrieben werden kann und damit auf aufwendige Schalteinrichtungen zur Steuerung der Gasströme zwischen Beladung und Regenerierung verzichtet werden kann.

Die erfindungsgemäße Abscheidesystem zur Entfernung von Partikeln mit seinem zweistufigen Aufbau, wobei die erste Stufe ein oder mehrere Fliehkraftabscheider und die zweite Stufe Feinfilter enthält, zeichnet sich dadurch aus, daß das Abscheidesystem Mittel zur thermischen Regenerierung des Feinfilters durch Erwärmen umfaßt und daß die zweite Stufe einen oder mehrere Feinfilterelemente aus Sintermetall enthält, wobei die Fliehkraftabscheider, insbesondere ein Multizyklonpaket, mit dem oder den Filterelementen verbunden sind. Vorteilhafterweise bestehen die Feinfilterelemente aus Filtervlies aus Sintermetall, vorzugsweise aus ferritischem Sintermetall.

## Patentansprüche

1. Verfahren zur Entfernung von Partikeln, insbesondere Rußpartikeln, aus in chemischen oder petrochemischen Anlagen anfallenden partikelhaltigen Prozeßgasströmen mit einem mehrstufigen Abscheidesystem, wobei die Partikel in einer ersten Stufe über Fliehkraftabscheider und in einer zweiten Stufe durch Feinfilter aus dem Gasstrom entfernt werden und wobei die Fliehkraftabscheider, insbesondere ein Multizyklonpaket, mit dem oder den Filterelementen verbunden sind, **dadurch gekennzeichnet**, daß in der zweiten Stufe Feinfilter aus Sintermetall eingesetzt werden, und daß die Feinfilter thermisch regeneriert werden.

2. Verfahren nach Anspruch 1, dadurch gekennzeichnet, daß als Fliehkraftabscheider Multizyklone eingesetzt werden.

3. Verfahren nach Anspruch 2, dadurch gekennzeichnet, daß die Feinfilter ferritische Sintermetalle enthalten.

4. Verfahren nach einem der Ansprüche 1 bis 3, dadurch gekennzeichnet, daß die Regenerierung des Feinfilters durch eine Temperaturerhöhung des Feinfilters auf eine Temperatur größer oder gleich der Zündtemperatur von Ruß durchgeführt wird.

5. Verfahren nach Anpruch 4, dadurch gekennzeichnet, daß die Erwärmung der Feinfilter zur Regenerierung durch direkte Anwärmung des zu reinigenden Gasstromes, durch Zumischen eines Heißgases in diesen Gasstrom und/oder durch Widerstandsheizung des leitenden Sintermetalles der Feinfilter erreicht wird.

6. Verfahren nach Anpruch 4 oder 5, dadurch gekennzeichnet, daß bei der Regenerierung des Feinfilters ein sauerstoffhaltiges Hilfsgas zugegeben wird.

7. Verfahren nach Anspruch 6, dadurch gekennzeichnet, daß das Hilfsgas zum überwiegenden Teil aus Stickstoff besteht.

8. Verfahren nach Anspruch 6 oder 7, dadurch gekennzeichnet, daß der Sauerstoffgehalt des Hilfsgases unter 10 %, vorzugsweise unter 5 %, Sauerstoff liegt.

9. Verfahren nach einem der Ansprüche 1 bis 8, dadurch gekennzeichnet, daß die Regenerierung periodisch durchgeführt wird.

10. Abscheidesystem zur Entfernung von Partikeln, insbesondere Rußpartikeln, aus Gasströmen chemischer oder petrochemischer Anlagen mit zweistufigem Aufbau, wobei die erste Stufe ein oder mehrere Fliehkraftabscheider und die zweite Stufe Feinfilter enthält, und wobei die Fliehkraftabscheider, insbesondere ein Multizyklonpaket, mit dem oder den Filterelementen verbunden sind, **dadurch gekennzeichnet**, daß das Abscheidesystem Mittel zur thermischen Regenerierung des Feinfilters durch Erwärmen umfaßt und daß die zweite Stufe einen oder mehrere Feinfilterelemente aus Sintermetall enthält.

11. Abscheidesystem nach Anspruch 10, dadurch gekennzeichnet, daß zur thermischen Regenerierung Mittel zur direkten Anwärmung des zu reinigenden Gasstromes und/oder Mittel zum Zumischen eines Heißgases zu diesem Gasstrom und/oder eine Widerstandsheizung des leitenden Sintermetalles des Feinfilters oder der Feinfilter vorgesehen sind.

12. Abscheidesystem nach Anspruch 10 oder 11, dadurch gekennzeichnet, daß das oder die Feinfilterelemente aus Filtervlies aus Sintermetall, vorzugsweise aus ferritischem Sintermetall, aufgebaut sind.

## Claims

1. Process for removing particles, in particular soot particles, from particle-containing process gas streams occurring in chemical or petrochemical plants using a multistage separation system, the particles being removed from the gas stream in a first stage via centrifugal separators and in a second stage by fine filters, and the centrifugal separators, in particular a multicyclone package, being connected to the filter element or elements, characterized in that fine filters made of sintered metal are used in the second stage, and in that the fine filters are thermally regenerated.

2. Process according to Claim 1, characterized in that the centrifugal separators used are multicyclones.

3. Process according to Claim 2, characterized in that the fine filters comprise ferritic sintered metals.

4. Process according to one of Claims 1 to 3, characterized in that the fine filter is regenerated by increasing the temperature of the fine filter to a temperature above or equal to the ignition temperature of soot.

5. Process according to Claim 4, characterized in that the fine filters are heated for regeneration by direct heating of the gas stream to be cleaned by admixture of a hot gas into this gas stream and/or by resistance heating of the conducting sintered metal of the fine filters.

6. Process according to Claim 4 or 5, characterized in that an oxygen-containing auxiliary gas is added in the regeneration of the fine filter.

7. Process according to Claim 6, characterized in that the auxiliary gas mainly comprises nitrogen.

8. Process according to Claim 6 or 7, characterized in that the oxygen content of the auxiliary gas is below 10%, preferably below 5%, oxygen.

9. Process according to one of Claims 1 to 8, characterized in that the regeneration is carried out periodically.

10. Separation system for removing particles, in particular soot particles, from gas streams of chemical or petrochemical plants having a two-stage structure, the first stage comprising one or more centrifugal separators and the second stage comprising fine filters, and the centrifugal separators, in particular a multicyclone package, being connected to the filter element or elements, characterized in that the separation system comprises means for the thermal regeneration of the fine filter by heating and in that the second stage comprises one or more fine filter elements made of sintered metal.

11. Separation system according to Claim 10, characterized in that, for the thermal regeneration, means are provided for the direct heating of the gas stream to be cleaned and/or means are provided for admixing a hot gas to this gas stream and/or resistance heating of the conducting sintered metal of the fine filter or the fine filters is provided.

12. Separation system according to Claim 10 or 11, characterized in that the fine filter element or fine filter elements consist of filter web made of sintered metal, preferably ferritic sintered metal.

## Revendications

1. Procédé pour éliminer des particules, en particulier des particules de noir de fumée, en provenance de courants gazeux de procédé contenant des particules, se formant dans des installations chimiques ou pétrochimiques, à l'aide d'un système de séparation à plusieurs étapes, les particules étant éliminées du courant gazeux dans une première étape par l'intermédiaire de séparateurs à force centrifuge, et dans une deuxième étape grâce à des filtres fins, et les séparateurs à force centrifuge, en particulier un ensemble multicyclone, étant reliés à l'élément ou aux éléments de filtre, caractérisé en ce que l'on utilise dans la deuxième étape des filtres fins en métal fritté, et en ce que les filtres fins sont régénérés de manière thermique.

2. Procédé selon la revendication 1, caractérisé en ce que l'on utilise en tant que séparateur à force centrifuge des multicyclones.

3. Procédé selon la revendication 2, caractérisé en ce que les filtres fins contiennent des métaux frittés ferritiques.

4. Procédé selon l'une quelconque des revendications 1 à 3, caractérisé en ce que la régénération du filtre fin est effectuée grâce à une augmentation de température du filtre fin à une température supérieure ou égale à la temperature d'inflammation du noir de fumée.

5. Procédé selon la revendication 4, caractérisé en ce que l'échauffement du filtre fin en vue de la régénération est réalisé par chauffage direct du courant gazeux à purifier, par mélange d'un gaz chaud dans ce courant gazeux et/ou par chauffage ohmique du métal fritté conducteur des filtres fins.

6. Procédé selon la revendication 4 ou 5, caractérisé en ce que l'on ajoute, lors de la régénération du filtre fin, un gaz auxiliaire contenant de l'oxygène.

7. Procédé selon la revendication 6, caractérisé en ce que le gaz auxiliaire se compose en majeure partie d'azote.

8. Procédé selon la revendication 6 ou 7, caractérisé en ce que la teneur en oxygène du gaz auxiliaire se situe en-dessous de 10%, de préférence en-dessous de 5% d'oxygène.

9. Procédé selon l'une quelconque des revendications 1 à 8, caractérisé en ce que la régénération est effectuée de manière périodique.

10. Système de séparation pour éliminer des particules, en particulier des particules de noir de fumée en provenance de courants gazeux d'installations chimiques ou pétrochimiques, constitué de deux étapes, la première étape contenant un ou plusieurs séparateurs à force centrifuge, et la deuxième étape contenant des filtres fins, et les séparateurs à force centrifuge, en particulier un ensemble multicyclone, étant reliés à l'élément ou aux éléments de filtre, caractérisé en ce que le système de séparation comprend des moyens en vue de la régénération thermique du filtre fin par chauffage, et en ce que la deuxième étape contient un ou plusieurs éléments de filtres fins en métal fritté.

11. Systéme de séparation selon la revendication 10, caractérisé en ce que sont prévues, en vue de la régénération thermique, des moyens pour le chauffage direct du courant gazeux à purifier, et/ou des moyens pour le mélange d'un gaz chaud à ce courant gazeux, et/ou un chauffage ohmique du métal fritté conducteur du filtre fin ou des filtres fins.

12. Système de séparation selon la revendication 10 ou 11, caractérisé en ce que le ou les éléments de filtres fins sont constitués d'un matelas non tissé en métal fritté, de préférence en métal fritté ferritique.
